## Europäisches Patentamt

## European Patent Office

## Office européen des brevets

(19)

(11) Publication number: **0 021 675**
**B1**

(12)

# EUROPEAN PATENT SPECIFICATION

(45) Date of publication of patent specification: **14.09.83**

(51) Int. Cl.³: **C 01 B 33/28**

(21) Application number: **80301896.9**

(22) Date of filing: **06.06.80**

(54) Continuous-stream method of preparing crystalline zeolites.

(30) Priority: **11.06.79 US 47538**

(43) Date of publication of application:
**07.01.81 Bulletin 81/1**

(45) Publication of the grant of the patent:
**14.09.83 Bulletin 83/37**

(84) Designated Contracting States:
**BE DE FR GB IT NL**

(56) References cited:
**US - A - 3 702 886**
**US - A - 4 139 600**
**US - A - 4 151 189**

(73) Proprietor: **MOBIL OIL CORPORATION**
**150 East 42nd Street**
**New York New York 10017 (US)**

(72) Inventor: **Rollmann, Louis Deane**
**3 Dorann Avenue**
**Princeton, New Jersey (US)**
Inventor: **Valyocsik, Ernest William**
**960 Randolph Drive**
**Yardley, Pennsylvania (US)**

(74) Representative: **Cooper, John Anthony**
**CARPMAELS & RANSFORD 43 Bloomsbury Square**
**London WC1A 2RA (GB)**

Courier Press, Leamington Spa, England.

# Continuous-stream method of preparing crystalline zeolites

This invention relates generally to an improved method of preparing a crystalline zeolite material and particularly to an improved method of making crystalline zeolites on a continuous-stream basis.

Zeolitic materials, both natural and synthetic, have been demonstrated in the past to have catalytic properties for various types of hydrocarbon conversions. Certain zeolitic materials are ordered, porous crystalline aluminosilicates having a definite crystalline structure within which there are a large number of channels. These cavities and channels are precisely uniform in size. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may often be exchanged either entirely or partially by another type of cation utilizing ion exchange techniques in a conventional manner. By means of such cation exchange, it has been possible to vary the properties of a given aluminosilicate by suitable selection of the cation. The spaces between the tetrahedra are usually occupied by molecules of water prior to dehydration.

Prior art techniques have resulted in the formation of a great variety of synthetic aluminosilicates. These aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752) zeolite ZSM-5 (U.S. Patent 3,702,886), zeolite ZSM-11 (U.S. Patent 3,709,979), zeolite ZSM-12 (U.S. Patent 3,832,449), zeolite ZSM-20 (U.S. Patent 3,972,983), zeolite ZSM-35 (U.S. Patent 4,016,245), zeolite ZSM-21 and 38 (U.S. Patent 4,046,859), and zeolite ZSM-23 (U.S. Patent 4,076,842), merely to name a few.

Zeolite crystallization commonly conducted in large autoclaves, either static or stirred, frequently requires many hours for completion, and can be, by petroleum industry standards, labor-intensive. Manufacturing processes for commercial zeolites can be classified into two groups, those using homogeneous or heterogenous hydrogels and those based on pre-formed gels, for example, pelletized gels. The hydrogel processes conventionally employ large vats or autoclaves for stepwise mixing, gel aging and final crystallization, and several examples are reviewed in Chapter 9 of the book "Zeolite Molecular Sieves" by D. W. Breck, published in 1974.

Characterizing these conventional zeolite preparations, in addition to the frequency existence of competing zeolite product phases, has been a zeolite product of $SiO_2/Al_2O_3$ ratio$\leq$10 and a high alkalinity, with pH exceeding 12 and often exceeding 14. Expressed in terms of $OH/SiO_2$ mole ratios, the alkalinity of typical reaction mixture compositions used in the production of zeolites A, X and Y are given by D. W. Breck on his page 316, as 4.8, 2 and 1, respectively.

By contrast the zeolites of the present invention form a class characterized in their preparation by reaction mixtures of lower alkalinity and by a zeolite product of $SiO_2/Al_2O_3 > 12$. In addition they have a constraint index of between 1 and 12, and they are generally prepared in the presence of a N- or P-containing organic compound, such as disclosed in US—A—4139600.

The constraint index is calculated as follows:

$$\text{Constraint Index} = \frac{\log_{10}(\text{fraction of n-hexane remaining})}{\log_{10}(\text{fraction of 3-methylpentane remaining})}$$

The constraint index approximates the ratio of the cracking rate contants for the two hydrocarbons. Catalysts suitable for the present invention are those having a constraint index in the range of 1 to 12. Constraint Indices (CI) values for some typical catalysts are:

| CAS | C.I. |
|---|---|
| ZSM-5 | 8.3 |
| ZSM-11 | 8.7 |
| ZSM-12 | 2 |
| ZSM-38 | 2 |
| ZSM-35 | 4.5 |
| TMA Offretite | 3.7 |

More specifically, the zeolites of the present invention are prepared at $OH/SiO_2$ mole ratios below .1 and often below 0.5. The combination of low $OH/SiO_2$ and highly siliceous reaction mixtures results in gels which are quite stiff and difficult to mix. It is with these reaction mixtures that a continuous-stream crystallization process affords unique advantages, both in terms of production efficiency and in terms of product quality control. Possible advantages of a continuous-stream process include facile and independent control of nucleation and of growth stages of crystal formation by such techniques as temperature and pH gradients, by staged injection of nutrients such as $SiO_2$ and $Al_2O_3$ source materials and of crystallization modifiers such as N- or P-containing organic compounds, alkali metal salts, acids and bases, and by seeding. Note also that one of the common problems of earlier commercial production, the nucleation and growth of undesirable phases, can often be attenuated by the presence of an appropriate N- or P-containing organic compound.

The present invention relates to an improved method of preparing synthetic crystalline zeolite materials having a constraint index betweeen 1 and 12 and a $SiO_2/Al_2O_3$ ratio greater than 12 on a continuous-stream basis. More particularly the present invention relates to an improved method of preparing the zeolites ZSM-5, ZSM-11, ZSM-12, ZSM-21, ZSM-23, ZSM-35, ZSM-38 and ZSM-48 (described in our EP—A—15132).

Zeolite ZSM-5 for example, has the formula, in terms of mole ratios of oxides and in the anhydrous state, as follows:

$$0.9 \pm 0.2 \ M_{2/n}O:Al_2O_3:Y \ SiO_2:zH_2O$$

wherein M is at least one cation having a valance n, Y is at least 5 and z is 0—40. M can be an alkali metal, e.g. sodium and tetralkylammonium cations, the alkyl group containing 2—5 carbon atoms. The ZSM-5 composition has a characteristic X-ray diffraction pattern, the values of which are set forth in Table 1, of US—A—3702886.

Members of the family of zeolites designated herein as ZSM-5 have an exceptionally high degree of thermal stability thereby rendering them particularly effective for use in processes involving elevated temperatures. In this connection, ZSM-5 zeolites appear to be one of the most stable families of zeolites known to date.

ZSM-5 can also be prepared in the presence of amines or diamines as described in German Patent 2442240 or in US—A—4139600.

ZSM-11 can also be prepared in the presence of diamines as described in US—A—4108881.

ZSM-35 can also be prepared in the presence of diamines as described in US—A—4107195.

According to the present invention a method for preparing a crystalline zeolite having a constraint index between 1 and 12 and a $SiO_2/Al_2O_3$ ratio greater than 12 on a continuous stream basis comprises preparing a mixture containing sources of an alkali metal (M) oxide, $R_2O$ an oxide of aluminum, an oxide of silicon and water under controlled amounts of the resultant hydroxyl, silica and alumina components and having a composition, in terms of mole ratios, falling within the following ranges:

| | Broad | Preferred |
|---|---|---|
| $OH^-/SiO_2$ | $10^{-8}$ to 1.0 | 0.01 to 0.20 |
| $R/SiO_2$ | 0.01 to 0.6 | 0.02 to 0.20 |
| $H_2O/SiO_2$ | 5 to 200 | 15 to 50 |
| $M/SiO_2$ | 0.1 to 1.5 | 0.1 to 0.6 |
| $Al_2O_3/SiO_2$ | 0.08 to 0 | .01 to 0.05 |

wherein R is a tetrapropylammonium cation or an amine having a $pK_a$ greater than 7, said mixture being passed in a continuous stream through a heated reaction zone, and maintaining the mixture at a temperature between 20 and 300°C, at LHSV between 0.01 and 10 at a pressure between 1 and 60 atmospheres until crystals of said zeolite are formed, the space velocity and the temperature being adjusted to provide the desired degree of crystallinity in the product sold. Thereafter, the crystals are separated from the liquid and recovered. Crystals of the product zeolite may be introduced into the reaction mixture.

The reaction zone of the present invention may be horizontally or vertically positioned and, in the latter, liquid (gel) flow may be either up or down. The reactor may be of tubular design, in which case it will best have a length: diameter ratio between 2 and 200. Such a tubular reactor is called a plug-flow reactor. Provision can be made in the reactor for local (segmented) and variable mixing and the reactor may contain a central stirring element.

In addition, the reaction zone may contain provision for introducing crystallization nutrients and modifiers, i.e for altering reaction mixture composition along the stream. For example, modifiers such as quaternary ammonium compounds and amines of $pK_a$ greater than about 7 may be injected subsequent to gel formation and even subsequent to heating. Solution of acids such as HCl, $H_2SO_4$. $HNO_3$ and of bases such as NaOH and KOH can be added to alter the pH at varied stages of crystal growth. Nutrients such as solutions of sodium silicate, silica sol, aluminum sulfate or sodium aluminate can be injected to change crystallite composition, the first two for example to produce crystals having an outer shell essentially free from aluminum.

Preferably, the continuous process for making zeolites of $SiO_2/Al_2O_3$ ratio greater than 12 and with a constraint index of between 1 and 12 is initiated by pumping solutions of $SiO_2$ source material

and of $Al_2O_3$ source material into a continuous stream at a reactor inlet. $SiO_2$ source materials are usually sodium silicate, colloidal silica dispersions, silicic acid quaternary ammonium silicates, or tetraalkylorthosilicates. $Al_2O_3$ source materials commonly employed are sodium aluminate, aluminum sulfate, nitrate or chloride, or aluminum tri-alkoxides.

Acids such as HCl, $HNO_3$ or $H_2SO_4$, bases such as alkali metal or quaternary ammonium hydroxides, and usually the appropriate N- or P-containing organic compound are present in the $SiO_2$ and $Al_2O_3$ solutions such that, on mixing, a reaction mixture is obtained having an $OH/SiO_2$ ratio of less than 1 and preferably less than 0.5 whereupon a gel results.

In calculating $OH/SiO_2$ ratios, moles of acid (added as such, added in combination with $Al_2O_3$ as, for example, in $Al_2(SO_4)_3 \cdot 14H_2O$, or added as the acid salt for an amine, for example) and twice the moles of $Al_2O_3$ are subtracted from moles of hydroxide (added as NaOH, as $NaAlO_2$ or as $Na_2SiO_3$, for example) to yield a net hydroxide (OH) value.

The approprate N- or P-containing organic compound depends on the zeolite product phase desired. In the references cited above, tetraalkyl ammonium ions wherein the alkyl group contains 2—5 carbon atoms can be used for the production of the zeolites ZSM-5, ZSM-11, and ZSM-12. Amines and diamines with 2—20 carbon atoms and cyclic amines such as pyrrolidine, all with $pK_a$ of at least 7, have been successfully used to prepare such zeolites as ZSM-5, ZSM-11, ZSM-23, ZSM-35, ZSM-38 and ZSM-48.

As the reaction mixture passes through the reactor chamber it is heated at a temperature of between 50 and 250°C, preferably 160°C to 210°C. Pressures are 1 to 60 atmospheres, and space velocity (cc of reaction mixture per cc of reactor volume per hour) is between 0.01 and 10 and preferably between 0.1 and 2.

A slurry of zeolite is produced at the reactor outlet, and the zeolite is separated from the mother liquor by decantation or by filtration. The product crystals may be washed with water and dried at temperatures of about 110°C for up to 24 hours or they may be used directly for catalyst or for adsorbent manufacture.

In the case of many catalysts and adsorbents it is desired to incorporate the new product with another material resistant to the temperatures and other conditions employed in organic conversion processes. Such materials include active and inactive materials and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the new composition, i.e. combined therewith which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated into naturally-occurring clays, e.g., bentonite and kaolin, to improve the crush strength of the catalyst under commercial operating conditions. Said material, i.e., clays, oxides, etc., function as binders for the catalyst. It is desirable to provide a catalyst having good crush strength because in a petroleum refinery the catalyst is often subjected to rough handling, which tends to break the catalyst down into powder-like materials, which cause problems in processing. These clay binders have been employed normally only for the purpose of improving the crush strength of the catalyst.

Naturally-occurring clays which can be composited with the zeolite crystals include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the zeolite crystals also include inorganic oxides, notably alumina.

It is often desirable to replace the original cations in the as-synthesized zeolite, either before or after combination with a binder. This is normally accomplished by calcining the zeolite to about 500°C, preferably in an inert atmosphere such as nitrogen, to destroy organic compounds present in the original crystals. After cooling alkali metal cations may be replaced by exchange with $NH_4^+$ or $H_3O^+$ ions. A final heating to about 500°C will produce an active, acid catalyst.

In order to more fully illustrate the nature of the invention and the manner of practicing same, the following non-limitative examples are presented.

Unless otherwise noted all examples used Q-grand (commercially available mixture of sodium silicate 27.8% $SiO_2$, 8.4% $Na_2O$, 64% $H_2O$), $Al_2(SO_4)_3 \cdot 16H_2O$, $H_2SO_4$, and TPA-Br.

Example 1

In order to demonstrate the concept of this invention an upflow reactor was constructed, described in the aforesaid copending U.S. Patent Application filed concurrently herewith, of 1 1/4" o.d. stainless steel tubing which had a volume of 220 cc and a central stirring element. Solutions of 500 g Q-brand in 500 g water and of 16 g $Al_2(SO_4)_3 \cdot 16H_2O$, 45 g conc. $H_2SO_4$, 62g TPA-Br in 842 g water were pumped at about 35 cc/hour (each) into the bottom of the reactor.

The reaction mixture composition is given by the following mole ratios:

$$SiO_2/Al_2O_3 \quad =94$$
$$H_2O/SiO_2 \quad =39$$
$$OH/SiO_2 \quad =0.12$$
$$Na/SiO_2 \quad =0.60$$
$$TPA/SiO_2 \quad =0.10$$

Reactor conditions were 190—210°C stirred (~400 rpm), with 2859 kPa (400 psig) He pressure maintained over the liquid phase, LHSV=0.3. The reactor effluent, taken off the top of the column, was filtered, dried and analyzed by X-ray diffraction. The solid ws ZSM-5, in about 80% crystallinity.

Example 2

The example demonstrates that continuous-stream crystallization is possible for an extended period of time in the equipment described in Example 1. In this example run conditions were LHSV=0.2 and 225°C, with stirring at 300 rpm. Mole ratios were as for Example 1 except that $OH/SiO_2$ was 0.05. As shown in Table 1, the experiment was on stream for 51 hours and yielded 80.7 grams of zeolite product with crystallinity of 80—90%.

TABLE 1
Continuous-stream ZSM-5 crystallization

| Sample | Time on stream (hrs.) | Prod. Wt. | ZSM-5 Prod. crystallinity |
|---|---|---|---|
| I | 3.5 | 0.1 | Too small to analyze |
| II | 4.5 | 0.1 | 50% |
| III | 5.5 | 0.02 | — |
| IV | 7.0 | 0.4 | 75% |
| V | 11.0 | 1.1 | 80% |
| VI | overnight | 2.2 | 85% |
| VII | 27.5 | 2.6 | 85% |
| VIII | 29.2 | 2.5 | 80% |
| IX | 31.2 | 4.9 | 80% |
| X | 35.3 | 4.7 | 90% |
| XI | overnight | 34.6 | 85% |
| XII | 51 | 5.3 | 80% |
| XIII | Reactor residue= | 22.2 | 80% |
| | Total zeolite= | 80.7 gms | |

Example 2A

In this example the stirring blades on the central stirring element were adjusted to provide greater lift to the product crystals. The reaction mixture composition was the same as in Example 2; reaction conditions were LHSV 0.27, 230°C, 460 rpm. As shown in Table 2, the experiment was run for 48 hours and produced 153 g of zeolite with 90—100% crystallinity.

TABLE 2
Continuous-stream ZSM-5 crystallization

| Sample | Time on stream (hrs.) | Δt Samp.* (hr.) | Prod. Wt. | ZSM-5 Prod. Crystallinity |
|---|---|---|---|---|
| I | 7.5 | 4.7 | 0.8 | 99% |
| II | overnight, 18.5 | 10.9 | 6.9 | 100 |
| III | 21.0 | 2.4 | 2.6 | 99 |
| IV | 23.0 | 2.0 | 4.8 | 100 |
| V | 25.4 | 2.4 | 4.9 | 90 |
| VI | 26.7 | 1.3 | 4.9 | 90 |
| VII | 31.7 | 5.0 | 7.1 | 90 |
| VIII | overnight, 41.2 | 9.5 | 8.0 | 90 |
| IX | 45.4 | 3.0 | 8.0 | 90 |
| X | 47.9 | 2.5 | 8.6 | 100 |
| XI | Reactor residue= | | 96.7 | 100 |
| | Total ZSM-5= | | 153.3g | |

*Δt Samp.=time interval over which sample was collected.

In the examples below, a process variable study on rates and crystal morphology in ZSM-5 synthesis are examined using as variables the following mole ratios of reaction mixture components: (160°C with stirring)

$$SiO_2/Al_2O_3 \qquad Na/SiO_2$$
$$H_2O/SiO_2 \qquad TPA/SiO_2$$
$$OH/SiO_2 \qquad TMA/SiO_2$$

Unless noted all experiments used Q-brand $Al_2(SO_4)_3 \cdot 16H_2O$, $H_2SO_4$, and TPA-Br.

Examples 3—52
Process variables in ZSM-5 crystallization
160°C, stirred unless noted

| Example | Si/Al$_2$ | H$_2$O/Si | OH/Si | Na/Si | TPA/Si | R'/Si | Hrs. | Product |
|---|---|---|---|---|---|---|---|---|
| 3 | 00 | 40 | 0.01 | 0.59 | 0.10 | — | 7 | 100% ZSM-5 |
| 4 | 00 | 40 | 0.10 | 0.59 | 0.10 | — | 7 | 100% ZSM-5 |
| 5 | 90 | 40 | 0.30 | 0.59 | 0.05 | — | 7 | Amorphous |
| 6 | 90 | 40 | 0.30 | 0.59 | 0.10 | — | 7 | Amorphous |
| 7 | 90 | 40 | 0.30 | 0.59 | 0.10 | — | 18 | Amorphous |
| 8 | 90 | 40 | 0.30 | 0.59 | 0.10 | — | 30 | 30% ZSM-5 |
| 9 | 90 | 40 | 0.30 | 0.59 | 0.10 | — | 53 | 90% ZSM-5 |
| 10 | 90 | 40 | 0.30 | 0.59 | 0.10 | — | 88 | 100% ZSM-5 |
| 11 | 90 | 40 | 0.20 | 0.59 | 0.10 | — | 3 | Amorphous |
| 12 | 90 | 40 | 0.20 | 0.59 | 0.10 | — | 7 | 85% ZSM-5 |
| 13 | 90 | 40 | 0.10 | 0.59 | 0.10 | — | 3 | 50% ZSM-5 |
| 14 | 90 | 40 | 0.10 | 0.59 | 0.10 | — | 7 | 100% ZSM-5 |
| 15 | 90 | 40 | 0.10 | 0.59 | 0.10 | — | 7 | 100% ZSM-5 |
| 16 | 90 | 40 | 0.10 | 0.59 | 0.10 | — | 16 | 100% ZSM-5 |
| 17 | 90 | 40 | 0.10 | 0.59 | 0.10 | — | 48 | 100% ZSM-5 |
| 18 | 90 | 40 | 0.10 | 0.59 | 0.10 | — | 7[a] | 25% ZSM-5 |
| 19 | 90 | 40 | 0.05 | 0.59 | 0.10 | — | 3 | 60% ZSM-5 |
| 20 | 90 | 40 | 0.01 | 0.59 | 0.10 | — | 3 | 10% ZSM-5 |
| 21 | 90 | 40 | 0.01 | 0.59 | 0.10 | — | 7 | 100% ZSM-5 |
| 22 | 90 | 40 | 0.10 | 0.59 | 0.60 | — | 3 | 45% ZSM-5 |
| 23 | 90 | 40 | 0.10 | 0.59 | 0.60 | — | 7[b] | 100% ZSM-5 |
| 24 | 90 | 40 | 0.05 | 0.59 | 0.60 | — | 7 | 100% ZSM-5 |
| 25 | 90 | 40 | 0.10 | 0.59 | 0.05 | — | 3 | 10% ZSM-5 |
| 26 | 90 | 40 | 0.10 | 0.59 | 0.05 | — | 7 | 100% ZSM-5 |
| 27 | 90 | 40 | 0.10 | 0.59 | 0.03 | — | 7 | 80% ZSM-5 |
| 28 | 90 | 40 | 0.10 | 0.59 | 0.02 | — | 7 | 50% ZSM-5 |
| 29 | 90 | 40 | 0.10 | 1.18 | 0.10 | — | 1.5 | Amorphous |
| 30 | 90 | 40 | 0.10 | 1.18 | 0.10 | — | 3 | 90% ZSM-5 |
| 31 | 90 | 40 | 0.10 | 1.18 | 0.10 | — | 3[b] | Amorphous |
| 32 | 90 | 40 | 0.10 | 1.18 | 0.10 | — | 7 | 100% ZSM-5 |
| 33 | 90 | 40 | 0.10 | 1.18 | 0.05 | — | 7 | 100% ZSM-5 |
| 34 | 90 | 40 | 0.10 | 1.18 | 0.02 | — | 7 | 75% ZSM-5 |
| 35 | 90 | 20 | 0.10 | 0.59 | 0.10 | — | 3 | 85% ZSM-5 |
| 36 | 90 | 20 | 0.10 | 0.59 | 0.10 | — | 7 | 100% ZSM-5 |
| 37 | 90 | 40 | 0.10 | 0.59 | 0.10 | — | 3[c] | 100% ZSM-5 |
| 38 | 90 | 40 | 0.10 | 0.59 | 0.10 | — | 1.5[c] | 100% ZSM-5 |
| 39 | 90 | 40 | 0.10 | 1.18 | 0.10 | — | 1.5[c] | 100% ZSM-5 |
| 40 | 90 | 40 | 0.10 | 0.59 | 0.10 | 0.10 TMA | 7 | 80% ZSM-5 |
| 41 | 90 | 40 | 0.01 | 0.59 | 0.10 | 0.05 TMA | 7 | 80% ZSM-5 |
| 42 | 90 | 40 | 0.01 | 0.59 | 0.10 | 0.05 TMA | 16 | 100% ZSM-5 |
| 43 | 90 | 40 | 0.01 | 0.59 | 0.10 | 0.10 TMA | 7 | 25% ZSM-5 |
| 44 | 90 | 40 | 0.01 | 0.59 | 0.05 | 0.05 TMA | 21 | 100% ZSM-5 |
| 45 | 60 | 40 | 0.30 | 0.59 | 0.10 | — | 7 | Amorphous |
| 46 | 60 | 40 | 0.10 | 0.59 | 0.10 | — | 7 | 95% ZSM-5 |
| 47 | 60 | 40 | 0.10 | 0.59 | 0.10 | — | 7 | 80% ZSM-5 |
| 48 | 30 | 40 | 0.30 | 0.59 | 0.60 | — | 7 | Amorphous |
| 49 | 30 | 40 | 0.30 | 0.59 | 0.10 | — | 7 | Amorphous |
| 50 | 30 | 40 | 0.30 | 0.59 | 0.10 | — | 64 | 65% ZSM-5 35% Mordenite |
| 51 | 30 | 40 | 0.10 | 0.59 | 0.10 | — | 7 | Amorphous |
| 52 | 30 | 40 | 0.10 | 0.59 | 0.10 | — | 7 | 20% ZSM-5 |

[a]—Stopped stirrer when temperature reached 160°C
[b]—If 16 hours at 25°C before heating, only 90% (Example 23)
[c]—225°C.

From the foregoing Examples 3—52 the process variable effects can be summarized as follows, first as they influence rates and then crystal morphology.

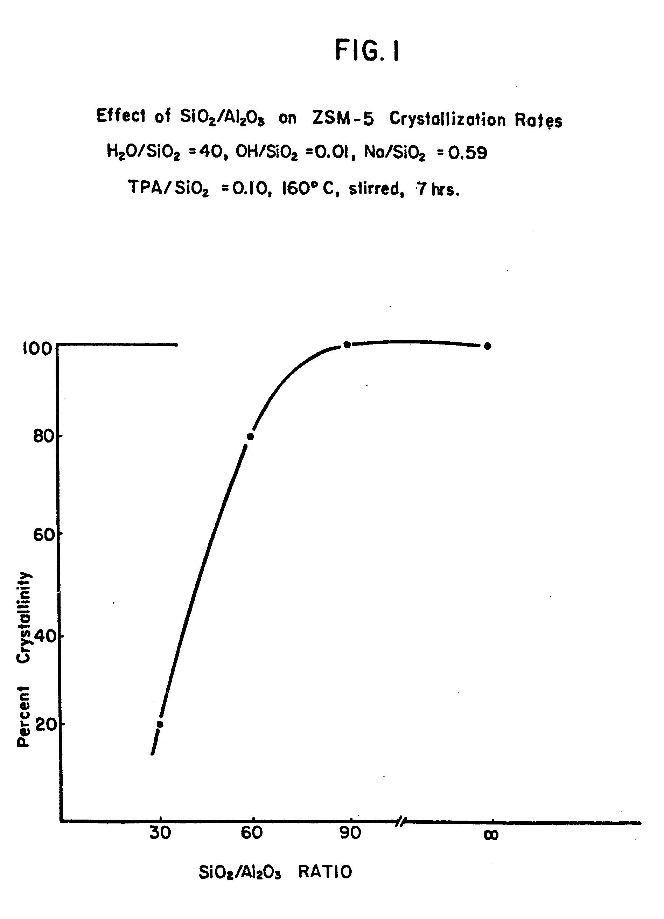

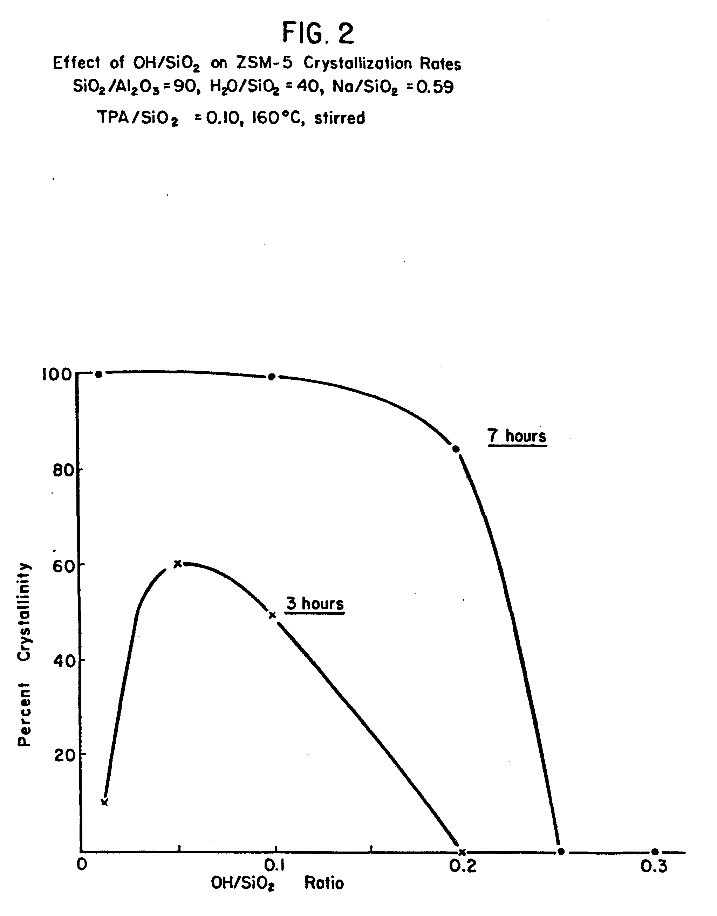

The rates are strongly dependent on $SiO_2/Al_2O_3$ and $OH/SiO_2$ ratios, as shown in Figures 1 and 2, and decrease with decreasing $SiO_2/Al_2O_3$ ratio. The data suggests that this trend is intrinsic, i.e., that it can be only partially overcome by changes in reaction mixture formulation, such as $TPA/SiO_2$.

Concentrating on a single ZSM-5 preparation (from gels of $SiO_2/Al_2O_3=90$), $OH/SiO_2$ emerges as the dominant variable. As shown in Figure 2, a pronounced optimum exists in the rate curve at low $OH/SiO_2$ ratio (about 0.05). $H_2O/SiO_2$ and $Na/SiO_2$ have little effect on rate at 160°C, over a range of compositions.

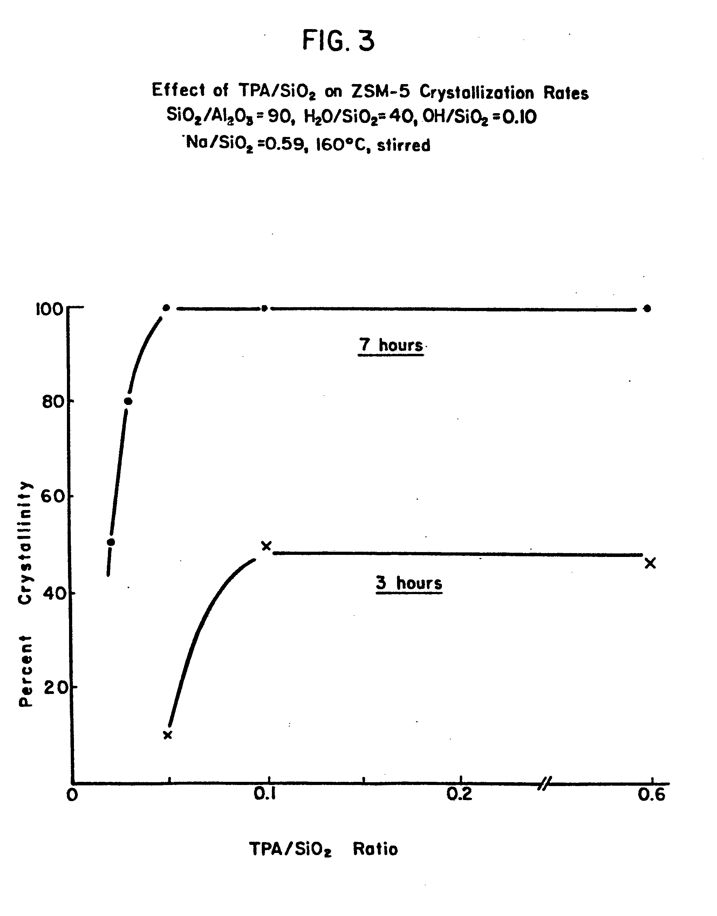

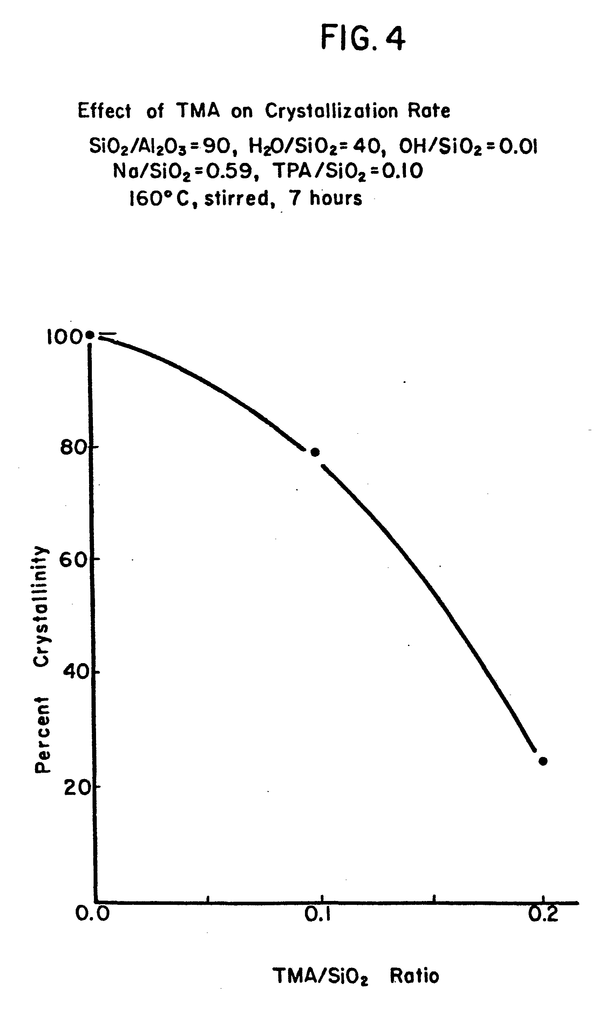

It is known that TPA is incorporated into ZSM-5 in a stoichiometry corresponding to 3—4 TPA/unit cell (0.03—0.04 $TPA/SiO_2$). The data in Figure 3 reflect this stoichiometry in that effects of $TPA/SiO_2$ became pronounced only at or below about 0.05. In a stirred crystallization at $OH/SiO_2=0.1$, the lack of further increase in rate with $TPA/SiO_2$ (Figure 3, 3 hours) suggests that surface nucleation predominates (over solution-phase) and that TPA is not rate-limiting. Morphology effects (see below) support this assertion.

TMA (tetramethylammonium ion) addition to the reaction mixture is known to produce large, well-shaped ZSM-5 crystals as described in U.S. 4,139,600. The data in Figure 4 shows that rates decline as TMA is added to a conventional reaction mixture.

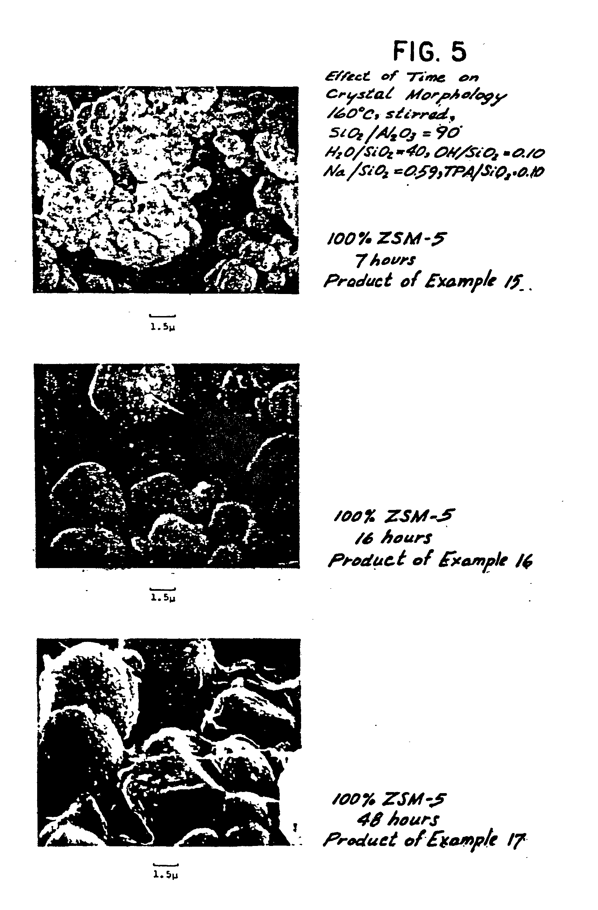

Accompanying changes in rates are changes in shape and size of the product crystals. Superimposed on any correlation with reaction mixture components was a time-dependence of crystal size as shown in Figure 5. As expected, crystals, in equilibrium with the solution phase, are constantly growing in size.

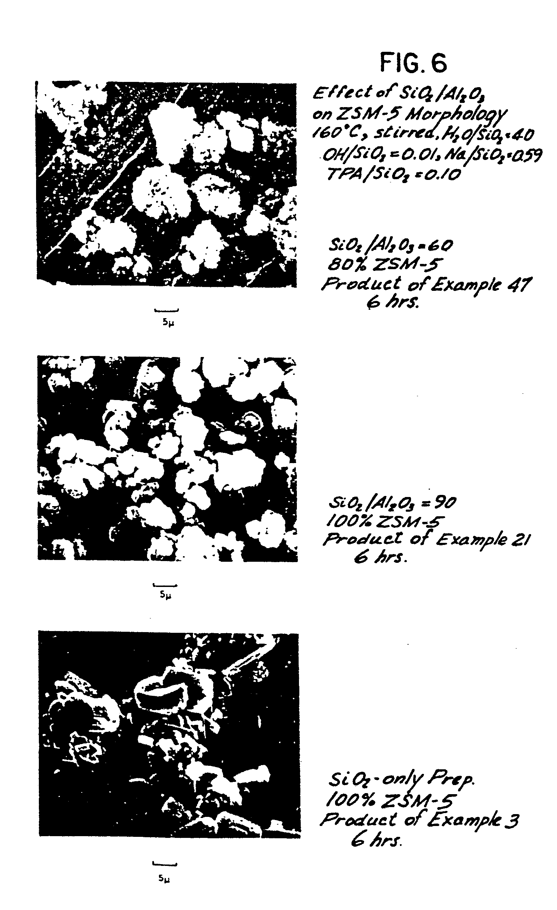

Crystal morphology, like rate, is most sensitive to $SiO_2/Al_2O_3$ and to $OH/SiO_2$ ratio. Figure 6 shows that well defined, large crystals form more readily as the $SiO_2/Al_2O_3$ ratio increases, a trend paralleling ease (rate) of formation of these various samples and suggesting that incorporation of aluminum into the framework is a disruptive, difficult process.

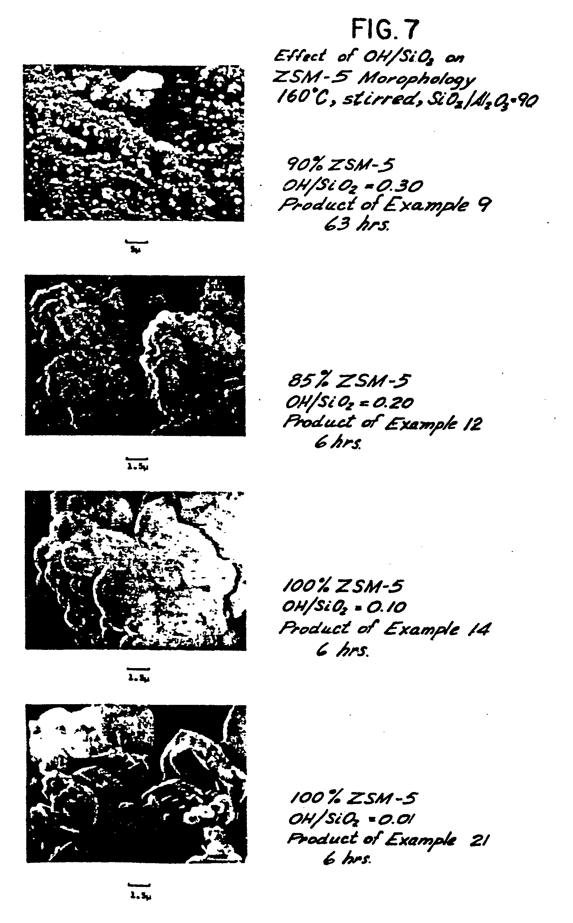

$OH/SiO_2$ influences both size and agglomeration, as shown in Figure 7. At high $OH/SiO_2$ (0.3) small, highly dispersed crystals are found whereas large, well-defined ones result at the other extreme ($OH/SiO_2=0.01$). At the very high $OH/SiO_2$, crystal growth and dissolution would be competing and an equilibrium, to produce smaller crystals, would result.

At $OH/SiO_2=0.01$ the dissolution process would be largely absent and crystallization more orderly, yielding the larger, well-defined materials.

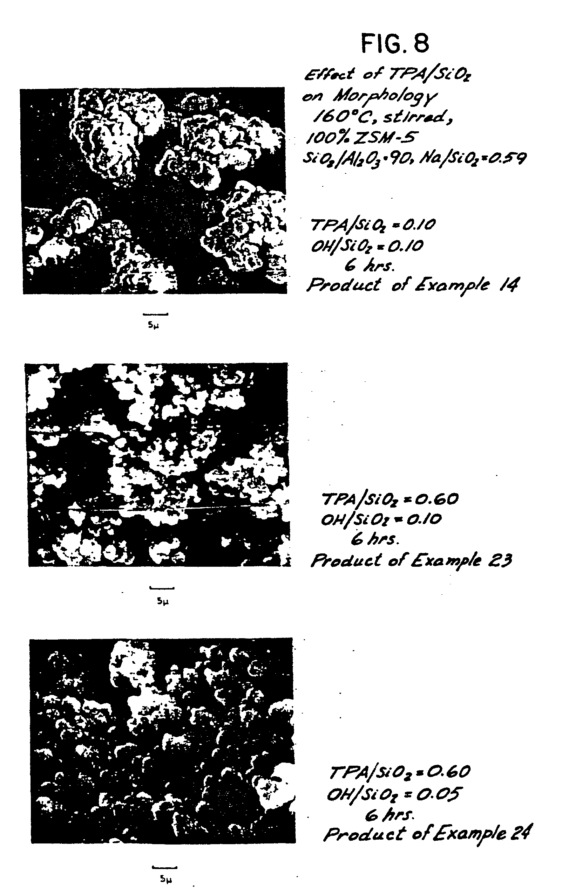

Figure 8 shows the influence of $TPA/SiO_2$, a ratio which should alter the relative importance of surface and solution-phase nucleation. As $TPA/SiO_2$ increased, the agglomerate intergrowths broke up to yield dispersed crystals. Combining the two effects (high $TPA/SiO_2$ and lower $OH/SiO_2$) produced a further improvement, to larger but still well-dispersed crystals.

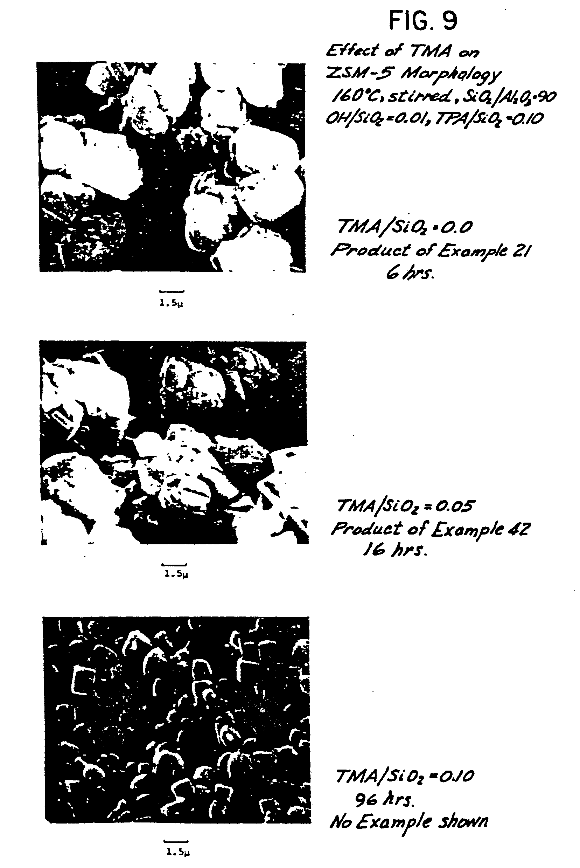

The comparison in Figure 9 shows the influence of TMA and how it can be supplemented by controlling $OH/SiO_2$. It seems probable that TMA primarily inhibits surface nucleation. Thus, at higher $OH/SiO_2$, where (Figure 7) surface and solution-phase nucleation compete to produce agglomerates, TMA has spectacular effects. At low $OH/SiO_2$ however, as in Figure 9, these effects, and the differences, become less pronounced.

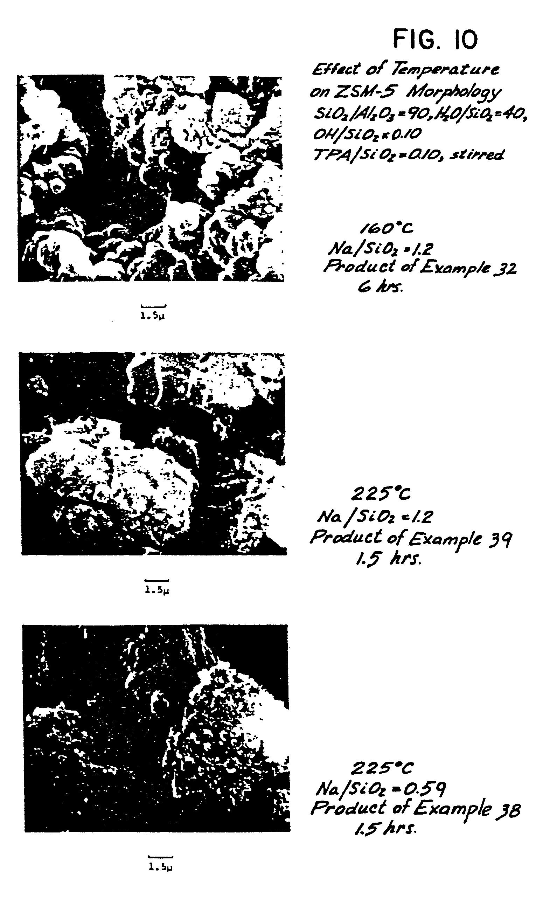

One last variable is significant, the temperature. In Figure 10 are compared ZSM-5 samples prepared at 160° and 225°C, with and without added sodium. Evident at the higher temperature are both very large, misshapen crystals and "new" smaller ones, suggesting the absence of distinct nucleation and growth stages in the crystallizing mixture.

## Claims

1. A method for preparing a crystalline zeolite having a constraint index between 1 and 12 and a $SiO_2/Al_2O_3$ ratio greater than 12 on a continuous stream basis which comprises preparing a mixture containing sources of an alkali metal (M) oxide, $R_2O$, an oxide of aluminum, an oxide of silicon and water under controlled amounts of the resultant hydroxyl, silica and alumina components and having a composition, in terms of mole ratios falling within the following ranges:

| | |
|---|---|
| $OH^-/SiO_2$ | $10^{-8}$ to 1.0 |
| $R/SiO_2$ | 0.01 to 0.6 |
| $H_2O/SiO_2$ | 5 to 200 |
| $M/SiO_2$ | 0.1 to 1.5 |
| $Al_2O_3/SiO_2$ | 0.08 to 0 |

wherein R is a tetrapropylammonium cation or an amine having a $pK_a$ greater than 7, said mixture being passed in a continuous stream, through a heated reaction zone and maintaining the mixture at a temperature between 20 and 300°C, at LHSV between 0.01 and 10 at a pressure between 1 and 60 atmospheres until crystals of said zeolite are formed.

2. The method of Claim 1 wherein the mixture has a composition, in terms of mole ratios, falling within the following ranges:

| | |
|---|---|
| $OH^-/SiO_2$ | 0.01 to 0.2 |
| $R/SiO_2$ | 0.02 to 0.2 |
| $H_2O/SiO_2$ | 15 to 50 |
| $Na/SiO_2$ | 0.1 to 0.6 |
| $Al_2O_3/SiO_2$ | 0.05 to 0.001 |

3. The method according to Claims 1 and 2 wherein the temperature is maintained between from 160°C to 210°C.

4. The method of Claims 1, 2 and 3 wherein said sources of an alkali metal oxide, $R_2O$, an oxide of aluminum, and an oxide of silicon are introduced along the continuous stream.

5. The method according to Claim 4 wherein modifiers including acids and bases are introduced step-wise into the reaction mixture for pH control during crystallization.

6. The method according to Claim 1 and 2 wherein seed crystals of the product zeolite are introduced into the reaction mixture.

**Patentansprüche**

1. Verfahren zur Herstellung eines kristallinen Zeoliths mit einem Grenzwertindex (constraint index) zwischen 1 und 12 und einem $SiO_2/Al_2O_3$-Verhältnis von mehr als 12 in einer kontinuierlichen Strömung, das die Herstellung einer Mischung umfaßt, die Ausgangsmaterialien für ein Alkalimetall (M)-Oxid $R_2O$, ein Aluminium oxid, ein Siliciumoxide und Wasser bei gesteuerten Mengen der erhaltenen Hydroxyl-, Siliciumoxid- und Aluminiumoxid-Bestandteile enthält und eine Zusammensetzung aufweist, die, ausgedrückt in molaren Verhältnissen, in die folgenden Bereiche fällt:

| | |
|---|---|
| $OH^-/SiO_2$ | $10^{-8}$ bis 1,0 |
| $R/SiO_2$ | 0,01 bis 0,6 |
| $H_2O/SiO_2$ | 5 bis 200 |
| $M/SiO_2$ | 0,1 bis 1,5 |
| $Al_2O_3/SiO_2$ | 0,08 bis 0 |

wobei R ein Tetrapropylammonium-Kation oder ein Amin ist, das einen $pK_a$-Wert von größer als 7 aufweist, wobei die genannte Mischung in einem kontinuierlichen Strom durch eine beheizte Reaktionszone geleitet wird, und wobei die Mischung auf einer Temperatur zwischen 20 und 300°C, auf einer Raumgeschwindigkeit zwischen 0,01 und 10 und unter einem Druck zwischen 1 und 60 Atmosphären gehalten wird, bis sich Kristalle des genannten Zeoliths gebildet haben.

2. Verfahren nach Anspruch 1, bei dem die Mischung, ausgedrückt als molare Verhältnisse, eine Zusammensetzung aufweist, die in die folgenden Bereiche fällt:

| | |
|---|---|
| $OH^-/SiO_2$ | 0,01 bis 0,2 |
| $R/SiO_2$ | 0,02 bis 0,2 |
| $H_2O/SiO_2$ | 15 bis 50 |
| $Na/SiO_2$ | 0,1 bis 0,6 |
| $Al_2O_3/SiO_2$ | 0,05 bis 0,001 |

3. Verfahren nach den Ansprüchen 1 und 2, bei dem die Temperatur zwischen 160°C bis 210°C gehalten wird.

4. Verfahren der Ansprüche 1, 2 und 3, bei dem die Ausgangsmaterialien für ein Alkalimetalloxid, $R_2O$, ein Aluminiumoxid und ein Siliciumoxid längs des kontinuierlichen Stroms zugegeben werden.

5. Verfahren nach Anspruch 4, bei dem Säuren und Basen umfassende Modifikatoren zur Steuerung des pH-Werts während der Kristallisation stufenweise der Reaktionsmischung zugefügt werden.

6. Verfahren nach den Ansprüchen 1 und 2, bei dem der Reaktionsmischung Impfkristalle des Produkt-Zeoliths zugesetzt werden.

**Revendications**

1. Procédé de préparation d'une zéolite cristalline ayant un indice de contrainte entre 1 et 12 et un rapport $SiO_2/Al_2O_3$ supérieur à 12 sur la base d'un flux continu constitant à préparer un mélange contenant des sources d'un oxyde de métal (M) alcalin, $R_2O$, un oxyde d'aluminium, un oxyde de silicium et de l'eau, en quantités contrôlées des composants hydroxyle, silice et alumine qui en résultent et ayant une composition, en terme de rapports molaires, tombant dans les gammes suivantes:

| | |
|---|---|
| $OH^-/SiO_2$ | $10^{-8}$ à 1,0 |
| $R/SiO_2$ | 0,01 à 0,6 |
| $H_2O/SiO_2$ | 5 à 200 |
| $M/SiO_2$ | 0,1 à 1,5 |
| $Al_2O_3/SiO_2$ | 0,08 à 0 |

dans lequel:

R est un cation tétrapropylammonium ou une amine ayant un $pK_a$ supérieur à 7,

ledit mélange étant passé à flux continu à travers une zone réactionnelle chauffée, et à maintenir le mélange à une température comprise entre 20 et 300°C, à une LHSV comprise entre 0,01 et 10, à une pression comprise entre 1 et 60 atmosphères, jusqu'à ce que se forment des cristaux de ladite zéolite.

2. Procédé suivant la revendication 1 dans lequel le mélange a une composition en terme de rapports molaires, tombant dans les gammes suivantes:

| | |
|---|---|
| $OH^-/SiO_2$ | 0,01 à 0,2 |
| $R/SiO_2$ | 0,02 à 0,2 |
| $H_2O/SiO_2$ | 15 à 50 |
| $Na/SiO_2$ | 0,1 à 0,6 |
| $Al_2O_3/SiO_2$ | 0,05 à 0,001 |

3. Procédé suivant les revendications 1 et 2 dans lequel la température est maintenue entre 160 et 210°C.

4. Procédé suivant les revendications 1, 2 et 3, dans lequel lesdites sources d'un oxyde de métal alcalin, $R_2O$, un oxyde d'aluminium et un oxyde de silicium sont introduits au cours du courant continu.

5. Procédé suivant la revendication 4, dans lequel les agents de modification comprenant des acides et des bases sont introduits par étape dans le mélange réactionnel pour la maîtrise du pH pendant la cristallisation.

6. Procédé suivant les revendications 1 et 2, dans lequel les cristaux d'ensemencement du produit zéolite sont introduits dans le mélange réactionnel.

# FIG. I

Effect of SiO$_2$/Al$_2$O$_3$ on ZSM-5 Crystallization Rates

H$_2$O/SiO$_2$ = 40, OH/SiO$_2$ = 0.01, Na/SiO$_2$ = 0.59

TPA/SiO$_2$ = 0.10, 160° C, stirred, 7 hrs.

# FIG. 2

Effect of OH/SiO$_2$ on ZSM-5 Crystallization Rates
SiO$_2$/Al$_2$O$_3$ = 90, H$_2$O/SiO$_2$ = 40, Na/SiO$_2$ = 0.59

TPA/SiO$_2$ = 0.10, 160°C, stirred

# FIG. 3

Effect of TPA/SiO$_2$ on ZSM-5 Crystallization Rates
SiO$_2$/Al$_2$O$_3$ = 90, H$_2$O/SiO$_2$ = 40, OH/SiO$_2$ = 0.10
Na/SiO$_2$ = 0.59, 160°C, stirred

**7 hours**

**3 hours**

Percent Crystallinity

TPA/SiO$_2$ Ratio

# FIG. 4

Effect of TMA on Crystallization Rate

$SiO_2/Al_2O_3 = 90$, $H_2O/SiO_2 = 40$, $OH/SiO_2 = 0.01$
$Na/SiO_2 = 0.59$, $TPA/SiO_2 = 0.10$
$160°C$, stirred, 7 hours

Percent Crystallinity vs. TMA/SiO₂ Ratio

## FIG. 5

Effect of Time on Crystal Morphology
160°C, stirred,
$SiO_2/Al_2O_3 = 90$
$H_2O/SiO_2 = 40$, $OH/SiO_2 = 0.10$
$Na/SiO_2 = 0.59$, $TPA/SiO_2 = 0.10$

100% ZSM-5
7 hours
Product of Example 15

1.5μ

100% ZSM-5
16 hours
Product of Example 16

1.5μ

100% ZSM-5
48 hours
Product of Example 17

1.5μ

## FIG. 6

*Effect of $SiO_2/Al_2O_3$ on ZSM-5 Morphology 160°C, stirred, $H_2O/SiO_2=40$ $OH/SiO_2=0.01$, $Na/SiO_2=0.59$ $TPA/SiO_2=0.10$*

*$SiO_2/Al_2O_3=60$ 80% ZSM-5 Product of Example 47 6 hrs.*

5µ

*$SiO_2/Al_2O_3=90$ 100% ZSM-5 Product of Example 21 6 hrs.*

5µ

*$SiO_2$-only Prep. 100% ZSM-5 Product of Example 3 6 hrs.*

5µ

## FIG. 7

Effect of $OH/SiO_2$ on ZSM-5 Morophology
160°C, stirred, $SiO_2/Al_2O_3$=90

90% ZSM-5
$OH/SiO_2$ = 0.30
Product of Example 9
63 hrs.

85% ZSM-5
$OH/SiO_2$ = 0.20
Product of Example 12
6 hrs.

100% ZSM-5
$OH/SiO_2$ = 0.10
Product of Example 14
6 hrs.

100% ZSM-5
$OH/SiO_2$ = 0.01
Product of Example 21
6 hrs.

## FIG. 8

*Effect of TPA/SiO₂*
*on Morphology*
*160°C, stirred,*
*100% ZSM-5*
*SiO₂/Al₂O₃ = 90, Na/SiO₂ = 0.59*

*TPA/SiO₂ = 0.10*
*OH/SiO₂ = 0.10*
*6 hrs.*
*Product of Example 14*

5μ

*TPA/SiO₂ = 0.60*
*OH/SiO₂ = 0.10*
*6 hrs.*
*Product of Example 23*

5μ

*TPA/SiO₂ = 0.60*
*OH/SiO₂ = 0.05*
*6 hrs.*
*Product of Example 24*

5μ

# FIG. 9

Effect of TMA on
ZSM-5 Morphology
160°C, stirred, $SiO_2/Al_2O_3 = 90$
$OH/SiO_2 = 0.01$, $TPA/SiO_2 = 0.10$

$TMA/SiO_2 = 0.0$
Product of Example 21
6 hrs.

$TMA/SiO_2 = 0.05$
Product of Example 42
16 hrs.

$TMA/SiO_2 = 0.10$
96 hrs.
No Example shown

9

## FIG. 10

Effect of Temperature
on ZSM-5 Morphology
$SiO_2/Al_2O_3 = 90$, $H_2O/SiO_2 = 40$,
$OH/SiO_2 = 0.10$
$TPA/SiO_2 = 0.10$, stirred

160°C
$Na/SiO_2 = 1.2$
Product of Example 32
6 hrs.

1.5μ

225°C
$Na/SiO_2 = 1.2$
Product of Example 39
1.5 hrs.

1.5μ

225°C
$Na/SiO_2 = 0.59$
Product of Example 38
1.5 hrs.

1.5μ

10